# EUROPEAN PATENT APPLICATION

(11) **EP 3 791 726 A1**
(43) Date of publication of application: **17.03.2021**
(21) Application number: 20155739.4
(22) Date of filing: 05.02.2020
(51) Int. Cl.: A23C 9/16, A23C 9/20

(54) **A DRY POWDERED HUMAN MILK FORTIFIER**

(30) Priority: 07.02.2019 IN 201911004925
(71) Applicant: Saurin Enterprises PL, Port Melbourne, Victoria 3207 (AU)
(72) Inventor: Aggarwal, Rakesh, VICTORIA, 3207 (AU); Aggarwal, Saurabh, KORAMANGALA, BENGALURU (IN)
(74) Representative: ZBM Patents - Zea, Barlocci & Markvardsen

(57) **Abstract**

The invention relates to an energy rich powdered human milk fortifier with multiple embodiments. An embodiment presents human milk fortifier rich in protein. Another embodiment present human milk fortifier rich in lipid composition. The human milk fortifier comprising a protein component a fat component, a carbohydrate component selected from the group of Lactose and Oligosaccharides a moisture component nutrient in the powdered milk fortifier selected from the group of Nucleotides, Minerals including but not limited to calcium, phosphorous, IgA, IgM, IgG, Lactoferrin, Nucleotides, Linolenic acid and Growth factors alike.

The instant invention also relates to a method of providing nutrition to preterm infants by adding a fortifier powder to human milk and administering the fortified human milk to a premature infant. The invention further provides a method of promoting growth of a premature infant by administering fortified human milk to a premature infant.

## Description

The instant invention relates to a powdered human milk fortifier. The instant invention also relates to a method of providing nutrition to preterm infants by adding the fortifier powder to human milk and administering the fortified human milk to a premature infant. The invention further provides a method of promoting growth of an infant by administering the fortified human milk comprising of growth factors to a premature infant.

### BACKGROUND ART

Human milk is commonly recognized as the optimum feeding for infants due to its nutritional composition and immunological advantages. Milk from the infant's own mother is considered a desirable feeding for infants of all ages, but also for preterm, low-birth-weight infants in early newborn intensive care units.

If the infant cannot be fed with his own mother's milk, donor milk is considered to be second best. However, it was found that donor milk does not always supply the appropriate mixture of nutrients and immunological components, especially for preterm infants.

It was also found, that preterm human milk is apparently lacking in several constituents such as calcium, phosphorus and protein. Thus, it has been recommended that when preterm infants are fed preterm human milk, the human milk be fortified to better meet the nutritional requirement.

Under certain conditions also term infants during some stage of their development need additives to the milk or supplemental feeding to get the optimum nutritional conditions for ideal growth and best resistance to illnesses. Herewith explicit reference shall be made to a very comprehensive, detailed and general description of the problems and the present status of development in the field of human milk as recognised by the ordinary skill in the art.

### SUMMARY

It is an aim of the present invention to improve the nutrition of an infant.

A powdered milk fortifier manufacturing which is carried out in an automatic manner or semi-automatic manner is using the following steps: either in the combination of following steps or simply executing each step as optionally:
pooling; separating fat to produce skim milk; optionally microfiltration of the skimmed milk; pasteurization of the skimmed milk; concentrating the skimmed milk at low temperature to 40 to 65% total solids; drying the concentrated milk using freeze drying or lyophilisation. Such a process leads to a composition including but not limited to:
a protein component in the powdered milk fortifier in an amount ranging from 6 wt/wt % to 20 wt/wt %, or, alternatively, ranging from 6 wt/wt % to 30 wt/wt %; a fat component in the in the powdered milk fortifier in an amount ranging from 0.1 wt/wt % to 10 wt/wt %; a carbohydrate in the powdered milk fortifier selected from the group of Lactose and Oligosaccharides present in the in an amount from 50 wt/wt % to 75 wt/wt %; a moisture in the powdered milk fortifier in present in quantity of about 1.5 wt/wt % to about 4.5 wt/wt % of the powdered human milk fortifier.

The powdered milk fortifier further comprises of nutrients selected from the group of Nucleotides, Minerals including but not limited to calcium, phosphorous, IgA, IgM, IgG, Lactoferrin, Nucleotides, Linolenic acid and Growth factors alike.

The powdered milk fortifier manufacturing wherein the skimmed milk is concentrated using Ultrafiltration from about 1.1 times to 6 times to produce powdered human milk fortifier.

The powdered milk fortifier is also/additionally manufacturing using the method optionally further comprises processes selected from or in combination thereof:
centrifugal separation, microfiltration, membrane, Ultrafiltration separation, blending, evaporation under vacuum, concentration, reverse osmosis, freeze drying including but not limited to other methods of drying or combinations thereof are used.

The invention further provides a powdered human milk lipid rich fortifier with a fat component in a quantity ranging from 40 wt/wt % to about 80 wt/wt %, further in where the lipids are derived from human milk and a moisture component in quantity ranging from 1.5 wt/wt % to about 4.5 wt/wt %; and nutrients selected from the group of Nucleotides, Minerals including but not limited to calcium, phosphorous, IgA, IgM, IgG, Lactoferrin, Nucleotides, Linolenic acid and Growth factors alike is disclosed.

In the invention an energy rich human milk powder with an energy content in a quantity ranging from 70 cal/100 mL to about 90 cal/100 mL when reconstituted; a moisture component in a quantity ranging from 1.5 wt/wt % to about 4.5 wt/wt %; and nutrients selected from the group of Nucleotides, Minerals including but not limited to calcium, phosphorous, IgA, IgM, IgG, Lactoferrin, Nucleotides, Linolenic acid and Growth factors alike is disclosed.

### DETAILED DESCRIPTION

Incorporated herein, all publications, patents and patent applications, including any drawings and appendices by reference to the same extent as if each individual publication or patent application was specifically and individually indicated by reference incorporated.

Unless the context clearly dictates otherwise, the singular forms otherwise used herein and in the appended claims, "a", "an" and "the" include plural referents. Thus, for example, reference to "a sample" includes a plurality of such samples, and reference to "the protein" includes reference to one skilled in the art or more proteins and the like.

Unless defined otherwise, all technical and scientific terms used herein have the same meaning in the art to which this invention belongs one of ordinary skill in the art as commonly understood. Although methods and materials may be used as described herein with similar or equivalent methods and materials in the practice of the method and compositions of the present invention, this article describes exemplary methods, devices and materials.

Certain features of claimed subject matter have been illustrated as described herein, many modifications, substitutions, changes and equivalents will now occur to those skilled in the art. It is, therefore, to be understood that the appended claims are intended to cover all such embodiments and changes as fall within the true spirit of claimed subject matter.

The invention relates to a powdered human milk freeze dried fortifier that has been exclusively made from donor human milk. It is comprising of protein in an amount of from about 6 wt/wt % to about 30 wt/wt % of the fortifier powder. The fat is from 0.1 wt/wt % to about 10 wt/wt % of the powder. The unit dose of powder human milk fortifier is generally from about 0.5 gm to about 2 gm of powder per 25 ml of mother's milk. The carbohydrates (consisting of Lactose and Oligosaccharides) is from 50% to 75%. The rest of the composition consists of various other nutrients found in mother's milk which consists of HMO, Nucleotides, Minerals, IgA, IgM, IgG, Lactoferrin, Nucleotides, Linolenic acid and Growth factors and hundreds of other nutrients. This invention relates to a method of providing additional nutrition to preterm and normal infants by adding a fortifier powder to either mother's milk or donors milk and administering the fortified human milk to an infant. The invention further provides a method to provide quantity and quality of nutrients needed for preterm infants, so as to achieve growth similar to foetal growth coupled with satisfactory functional development.

The invention also relates to other Human Milk powder products which include the following:
Lipid rich powder for energy fortification. We have found in our extensive testing of more than 10,000 samples that human milk contains approximately 50-60 cal/100mL. As a result, the infants specially the pre-term infants do not receive expected energy and nutrient. Thus the infant does not obtain the desired growth pattern, particularly with regard to weight. The Lipid rich powder when added to mother's milk will increase the energy of the human milk. The lipid rich powder will contain more than 40% fat on wt/wt in powder form.

Energy rich human milk powder for reconstitution to make high energy donor human milk. Mothers who are unable to lactate sufficiently generally have to rely on either frozen donor milk or formula milk. Frozen donor milk has many logistics challenges and also may not have sufficient calories as mentioned above. We have found in our testing of more than 10,000 samples that human milk contains approximately 50-60 cal/100mL. As a result, the infants specially the pre-term infants do not receive expected energy and nutrient. Thus the infant does not obtain the desired growth pattern, particularly with regard to weight. The Energy Rich Human Milk Powder product has energy content greater than 70 cal/100mL when reconstituted. It is produced by adding lipids and/or human milk permeate/lactose concentrate or powder to donor mother's milk to achieve a calorific content greater than 70 cal/100 mL. This liquid is converted into powder with the method disclosed in this patent.

Other powders produced from human milk. In the process of manufacture of fortifier, we are generally left with the byproduct called permeate. This permeate contains mainly lactose, oligosaccharides, nucleotides and other ingredients that have a molecular weight less than the cutoff of the ultrafilteration membrane used. The permeate can be concentrated and converted to permeate powder using the method disclosed in this patent.

Given its unique nutritional and functional advantages, human milk (HM) should be considered as the first choice for the nutrition of all infants, including preterm newborns. Since its protein, mineral and energy contents are not suitable to meet the high needs of very-low-birth-weight (VLBW) infants, HM needs to be fortified for these components. Fortification of HM is an important nutritional intervention in order to provide required nutritional intake for appropriate growth. Most commercially available multi-nutrient fortifiers and protein concentrates are derived from bovine milk (BM) which has a protein composition very different from that of HM, fats are generally from other sources like vegetable oils/ fish oils which has a lipid profile very different from that of HM. The use of Bovine Milk proteins and lipids from other sources have been recently questioned for possible association with intestinal inflammation in VLBW infants.

It is a principal object of the invention to provide an improved powdered human milk fortifier for premature infants who require additional nutrients to support their growth and other infants who may need easy access to mother's milk. The invention consist of the following

A Protein fortifier powder which when added to human milk supplements the levels of protein, fat, Vitamins and minerals. Another object of this invention is to provide a method for providing supplemental nutrients to a premature infant who requires additional nutrients for growth.

A lipid rich fortifier powder which when added to human milk increases the calorific content of the mother's milk. Another object of this invention is to provide a method for providing supplemental nutrients to an infant who requires additional nutrients for growth.

A high energy human milk powder which when reconstituted with clean water results in a product that has all the qualities of the donor milk but does not need refrigeration and careful handling and cold chain which is hard to manage in a country like India.

A permeate powder that can be used as additive for producing high energy human milk powder.

The number of surviving children born prematurely have increased substantially over the last two decades. The major goal of enteral nutrient supply to these infants is to achieve growth similar to foetal growth coupled with satisfactory functional development. The preferred food for premature infants is fortified human milk from the infant's own mother. The guideline in the state of the art aims to provide proposed advisable ranges for nutrient intakes for stable growing preterm infants up to a weight of approximately 1800 gram. These recommendations are based on a considered review of available scientific reports on the subject, and on expert consensus where the available scientific data is considered inadequate. The following table is an extract of the main recommendations in state of art.

| **Min-Max** | **Kg ⁻¹ d ⁻¹** | **/100 kcal** |
|---|---|---|
| Fluid (ml) | 135 - 200 | |
| Energy (kcal) | 110 - 135 | |
| Protein (g) < 1 kg body weight | 4.0 - 4.5 | 3.6 - 4.1 |
| Protein (g) 1 - 1.8 kg body weight | 3.5 - 4.0 | 3.2 - 3.6 |
| Lipids (g) (of which MCT < 40%) | 4.8 - 6.6 | 4.4. - 6.0 |
| Carbohydrate (g) | 11.6 - 13.2 | 10.5 - 12 |

It is well understood that the mother's milk does not have adequate nutrition for the proper growth of pre-term and VLBW infants. As per the research conducted the protein content of Pre-term mother's milk is typically 1.6% which does not meet the ESPGHAN recommendations to achieve the growth similar to foetal growth coupled with satisfactory functional development. ESPGHAN recommends a level of protein in Pre-term milk fed to the babies which is generally 50% to 80% more than what is available in the milk naturally. Many companies have launched products (pre-NAN by Nestle and Lactodex by Raptakos, Brett and Company are two examples of commercially available milk fortifiers) based on bovine proteins, vegetable fats, maltodextrine and other synthetic ingredients. In discussion with many doctors, we understand that there is reluctance to use these products and some of the doctors believe that it does more harm than good. Most commercially available multi-nutrient fortifiers and protein concentrates are derived from bovine milk (BM), which has a protein composition very different from that of Human Milk (HM). The use of BM proteins has been recently questioned for possible association with intestinal inflammation in VLBW infants2. Prolacta in USA and NeoLacta Lifesciences in India has launched liquid fortifiers that have been exclusively produced from human milk. These have produced good results.

Premature infants stay in the NICU for several weeks after their mother has been released from the hospital. These infants are really small and can easily be held in the palm of an adult hand. They are usually placed in special incubators and may have respirators to assist in their breathing. In order to continue feeding the infants the mother must express milk at home into suitable containers, store the milk in the refrigerator and delivers it to the NICU.

One of the criticisms of liquid fortifier made from donor milk is that it displaces the mother's own milk which otherwise would have provided lot of essential nutrients like lactose, HMO, Nucleotides, IgA, IgM, IgG, Lactoferrin, Nucleotides, Linolenic acid and Growth factors that are not compensated by the Fortifiers made from Mother's milk in liquid form. The displacement can be as high as 50%. The reason for the loss of these essential nutrients is because of the manufacturing process in which to concentrate protein, membrane filteration is used (generally Ultrafilteration). The ultrafilteration membrane concentrates protein (and any larger molecules that have a MWCO greater than the membrane cut-off) very effectively and rejects molecules that are smaller than the membrane cutoff MWCO. In our trials where we used membranes of 3,000 MWCO to 5,000 MWCO, we found that the essential nutrients like lactose, HMO, Nucleotides, IgA, IgM, IgG, Lactoferrin and Linolenic acid gets rejected and the concentration of these in the final mixed product is significantly lower than that in the milk.
The current invention, overcomes these problems in a very simple and elegant method

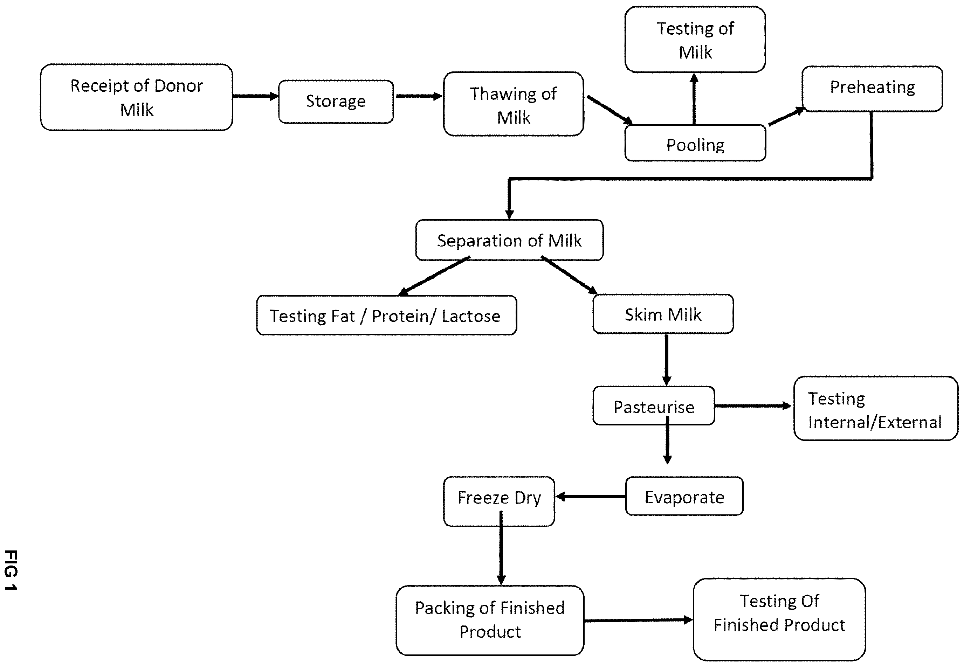

### Example 1 - Refer Flow Diagram 1 or Fig.1

In our process, we used the following steps
1. Pooling
2. Fat separation to produce skim milk (skim has fat typically less than 0.1%). We used centrifugal Separator but those skilled in the art may as well use other well know technologies to achieve the same objective.
3. Microfilteration (as described in our Indian Patent Application no 201811044349) if deemed necessary due to quality of milk
4. Pasteurisation of the skim milk
5. Low temperature concentration (preferably between 45oC and 63oC) of skim milk to 40 to 65% solids. We used vacuum evaporator but those skilled in the art may as well use other well-known technologies to achieve the same objective.
6. Drying of the concentrated milk using Freeze Drying also called lyophilisation. We used Freeze Dryer but those skilled in the art may as well use other well-known technologies to achieve the same objective.

The powder thus produced has undergone minimum processing, retains practically all the essential nutrients like lactose, HMO, Nucleotides, IgA, IgM, IgG, Lactoferrin, Linolenic acid and Growth factors available naturally in mother's milk. This powder can fortify the mother's milk in protein and essential nutrients present naturally in mother's milk like lactose, HMO, Nucleotides, IgA, IgM, IgG, Lactoferrin, Linolenic acid and Growth factors. The powder thus produced has the following composition:

| | Gms/100 gms of powder |
|---|---|
| Fat (g) | 2.49 |
| Protein (g) | 11.56 |
| Carbohydrate (g) | 73.61 |
| Total Solids (g) | 97.00 |

By adding 0.1 gms of this powder to 25 mL of Pre-term mother's milk, we get the following composition.

| | Mother's Milk 25 mL³ | Mother's Milk +One sachet of Mother's Milk Fortifier of Example 1 |
|---|---|---|
| Fat in Gms | 0.9 | 0.92 |
| Protein in Gms | 0.4 | 0.50 |
| Carbohydrate in Gms | 1.8 | 2.44 |
| Energy Cal | 16.90 | 20.04 |
| Calcium in mg | 9.50 | 13.46 |
| Iron in mg | 0.05 | 0.06 |
| Zinc in mg | 0.09 | 0.13 |
| Potassium in mg | 12.12 | 17.17 |

The rate of addition (fortification) to mother's milk can be varied depending on the children needs and the composition of mother's milk. One could use the ESPGHAN recommendations to determine the addition rate.

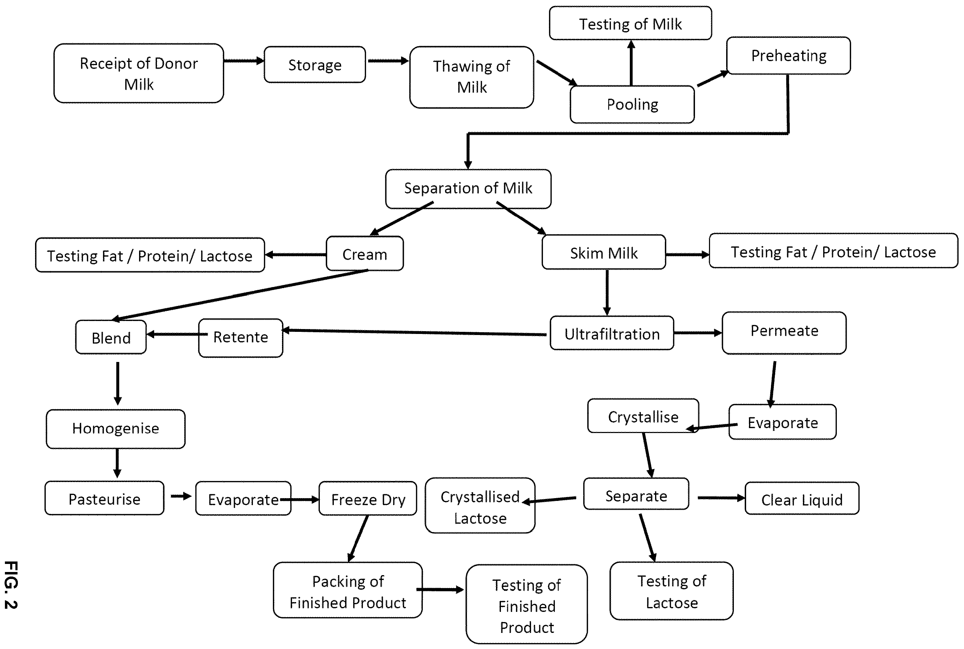

### Example 2 - Refer flow diagram 2 or Fig. 2

In our process, we used the following steps
1. Pooling
2. Fat separation to produce skim milk (skim has fat typically less than 0.1%). We used centrifugal Separator but those skilled in the art may as well use other well know technologies to achieve the same objective.
3. Microfilteration if deemed necessary due to quality of milk
4. Pasteurisation of the skim milk
5. Protein concentration using ultrafilteration as disclosed in our patent application number, 201811013027 with Indian Patent Office. The concentration can be as much as six-fold. In our example, we produced the final product by getting to 2 times the concentration. The lower the concentration, the lower is the loss of essential nutrients in permeate.
6. Low temperature, preferably between 45°C and 63°C concentration of ultrafiltered retente milk to 40 to 65% total solids. We used vacuum evaporator but those skilled in the art may as well use other well-known technologies to achieve the same objective.
7. Drying of the concentrated milk using Freeze Drying also called lyophilisation. We used Freeze Dryer but those skilled in the art may as well use other well-known technologies of drying (like spray drying, tray drying, vacuum oven drying etc.) to achieve the same objective.

The powder thus produced has undergone minimum processing, retains most of the essential nutrients like lactose, HMO, Nucleotides, IgA, IgM, IgG, Lactoferrin, Linolenic acid and Growth factors available naturally in mother's milk. This powder can fortify the mother's milk in protein and essential nutrients present naturally in mother's milk like lactose, HMO, Nucleotides, IgA, IgM, IgG, Lactoferrin, Linolenic acid and Growth factors. The powder thus produced had the following composition:

| | Gms/100 gms of powder |
|---|---|
| Fat | 10.98 |
| Protein | 14.61 |
| Lactose | 66.70 |
| Total Solids | 97.00 |

By adding 0.1 gms of this powder to 25 mL of Pre-term mother's milk, we get the following composition.

| | Mother's Milk 25 mL³ | Mother's Milk +One sachet of Mother's Milk Fortifier of Example 2 |
|---|---|---|
| Fat in Gms | 0.9 | 1.01 |
| Protein in Gms | 0.4 | 0.55 |
| Carbohydrate in Gms | 1.8 | 2.48 |
| Energy Cal | 16.90 | 21.25 |
| Calcium in mg | 9.50 | 19.86 |
| Iron in mg | 0.05 | 0.09 |
| Zinc in mg | 0.09 | 0.19 |
| Potassium in mg | 12.12 | 25.32 |

The addition rate to mother's milk can be varied depending on the children needs and the composition of mother's milk. One could use the ESPGHAN1 recommendations to determine the addition rate.

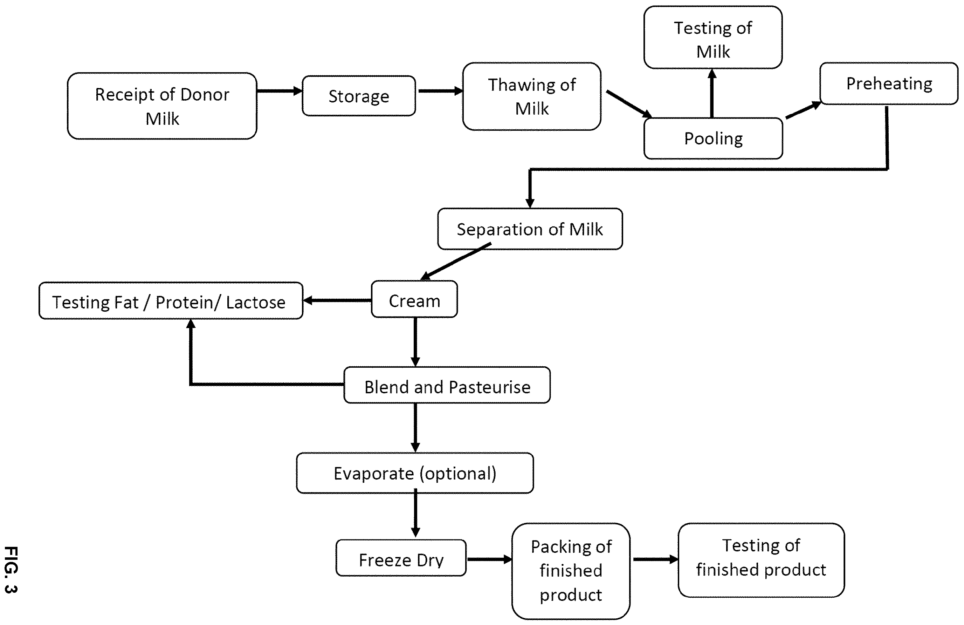

### Example 3 for production of Lipid Rich Powder illustration in Fig. 3

In our process, we used the following steps
1. Pooling
2. Fat separation to produce cream (cream fat can generally be set at the desired level here so that step 3 is not required). We used centrifugal Separator but those skilled in the art may as well use other well know technologies to achieve the same objective.
3. Cream standardisation to achieve the fat content in powder greater than 40% wt/wt if not achieved in step 2 above. The standardisation can be done using a carrier (maltodextrin or lactose or human milk components)
4. Homogenisation of the cream
5. Pasteurisation of the cream
6. Low temperature concentration (preferably between 45oC and 63oC) of cream if necessary
7. Drying of the concentrated cream using Freeze Drying also called lyophilisation. We used Freeze Dryer but those skilled in the art may as well use other well-known technologies of drying to achieve the same objective.
The powder thus produced has undergone minimum processing, retains practically all the essential nutrients present naturally in mother's milk like lipids, lactose, HMO, Nucleotides, IgA, IgM, IgG, Lactoferrin, Linolenic acid and Growth factors available naturally in mother's milk cream. This powder can fortify the mother's milk in lipids. The powder thus produced has the following composition

| | Gms/100 gms of powder |
|---|---|
| Fat | 52% |
| Protein | 1% |
| Carbohydrate | 43.5% |
| Total Solids | 2% |

By adding 0.1 gms of this powder to 25 mL of Pre-term mother's milk, we get the following composition.

| | Mother's Milk 25 mL³ | Mother's Milk +One sachet of Lipid Rich Milk Fortifier of Example 3 |
|---|---|---|
| Fat in Gms | 0.9 | 1.42 |
| Protein in Gms | 0.4 | 0.41 |
| Carbohydrate in Gms | 1.8 | 2.235 |
| Energy Cal | 16.90 | 23.36 |

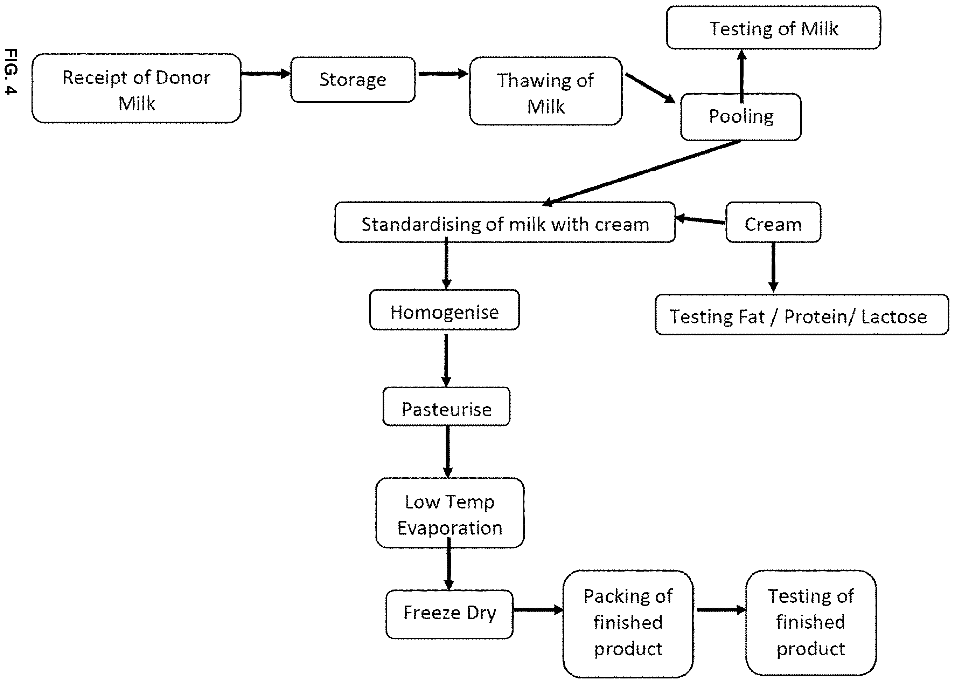

### Example 4: for the production of Energy rich human milk powder - illustrations in Fig. 4

In our process, we used the following steps
1. Pooling
2. Milk standardisation to achieve the desired energy value of the milk by using human cream and/or human permeate and other human milk components as may be required. In our example, we used only cream for milk standardisation.
3. Pasteurisation of the standardised milk
4. Low temperature concentration (preferably between 45oC and 63oC) of standardised milk to 40 to 65% solids. We used vacuum evaporator but those skilled in the art may as well use other well-known technologies to achieve the same objective.
5. Drying of the concentrated standardised milk using Freeze Drying also called lyophilisation. We used Freeze Dryer but those skilled in the art may as well use other well-known technologies of drying to achieve the same objective.

The powder thus produced has undergone minimum processing, retains practically all the essential nutrients present naturally in mother's milk like lactose, HMO, Nucleotides, IgA, IgM, IgG, Lactoferrin, Linolenic acid and Growth factors available naturally in mother's milk. This powder when reconstituted produces a high energy mother's milk. The powder thus produced to have 70 cal/100 mL when reconstituted has the following composition:

| | Gms/100 gms of powder |
|---|---|
| Fat | 2.49 |
| Protein | 11.56 |
| Carbohydrate | 73.61 |
| Total Solids | 97.00 |

By adding reconstituting with water, we get the following composition.

| | |
|---|---|
| Fat in Gms | 4.3 |
| Protein in Gms | 1.0 |
| Carbohydrate in Gms | 7.0 |
| Energy Cal/100 ml | 70.7 |

While the foregoing written description of the invention enables one of ordinary skill to make and use what is considered presently to be the best mode thereof those of ordinary skill will understand and appreciate the existence of variations, combinations, and equivalents of the specific embodiment, method, and examples herein. The invention should therefore not be limited by the above described embodiment, method, and examples, but by all embodiments and methods within the scope and spirit of the invention as claimed.

## Claims

1. A dry powdered human milk fortifier manufacturing comprising the steps of:
a. pooling;
b. separating fat to produce skim milk;
c. optionally microfiltration of the skimmed milk;
d. pasteurization of the skimmed milk;
e. concentrating the skimmed at low temperature to 40 to 65% solids;
f. drying the concentrated milk using freeze drying or lyophilisation;
**characterized in that**:
a. a protein component in the powdered milk fortifier in an amount ranging from 6 wt/wt % to 20 wt/wt %; or, alternatively, ranging from 6 wt/wt % to 30 wt/wt %;
b. a fat component in the in the powdered milk fortifier in an amount ranging from 0.1 wt/wt % to 10 wt/wt %;
c. a carbohydrate in the powdered milk fortifier selected from the group of Lactose and Oligosaccharides present in the in an amount from 50 wt/wt % to 75 wt/wt %;
d. a moisture in the powdered milk fortifier in present in quantity of about 1.5 wt/wt % to about 4.5 wt/wt % of the powdered human milk fortifier.
e. Nutrients in the powdered milk fortifier present from the group of Nucleotides, Minerals including but not limited to calcium, phosphorous, IgA, IgM, IgG, Lactoferrin, Nucleotides, Linolenic acid and Growth factors alike.

2. The dry powdered human milk fortifier manufacturing as claimed in claim 1 wherein the skimmed milk is concentrated using Ultrafiltration from about 1.1 times to 6 times to produce powdered human milk fortifier.

3. The dry powdered human milk fortifier manufacturing as claimed in claim 1 wherein the method optionally further comprises processes selected from or in combination thereof:
centrifugal separation, microfiltration, membrane, Ultrafiltration separation, blending, concentration by evaporation under vacuum preferably between 45°C and 63°C to 40% to 70% total solids on wt/wt, concentration, ultrafiltration, reverse osmosis, freeze drying including but not limited to other methods of drying or combinations thereof are used.

4. A dry powdered human milk lipid rich fortifier manufacturing comprising the steps of :
a. pooling;
b. separating fat to produce cream;
c. optionally cream standardisation converting the fat to powder greater than 40% wt/wt;
d. homogenisation of the cream;
e. pasteurization of the cream;
f. low temperature concentration, preferably between 45 degree Celsius and 63 degree celsius
g. drying the cream using freeze drying or lyophilisation;
**characterized in that**:
a. a fat component in the powdered human milk fortifier present in a quantity ranging from 40 wt/wt % to about 80 wt/wt %, further in where the lipids are derived from human milk
b. a moisture component in the powdered human milk fortifier present in quantity ranging from 1.5 wt/wt % to about 4.5 wt/wt %;
c. Nutrients in the powdered milk fortifier present from the group of Nucleotides, Minerals including but not limited to calcium, phosphorous, IgA, IgM, IgG, Lactoferrin, Nucleotides, Linolenic acid and Growth factors alike.

5. The dry powdered human milk fortifier manufacturing as claimed in claim 4 wherein the method optionally further comprises processes selected from or in combination thereof:
centrifugal separation, microfiltration, membrane, Ultrafiltration separation, blending, concentration by evaporation under vacuum preferably between 45°C and 63°C to 40% to 70% total solids on wt/wt, concentration, ultrafiltration, reverse osmosis, freeze drying including but not limited to other methods of drying or combinations thereof are used.

6. A dry powdered human milk energy rich fortifier manufacturing comprising the steps of:
a. Pooling
b. Milk standardisation to achieve the desired energy value of the milk by using human cream and/or human permeate and other human milk components as may be required. In our example, we used only cream for milk standardisation.
c. Pasteurisation of the standardised milk
d. Low temperature concentration (preferably between 45oC and 63oC) of standardised milk to 40 to 65% solids. We used vacuum evaporator but those skilled in the art may as well use other well-known technologies to achieve the same objective.
e. Drying of the concentrated standardised milk using Freeze Drying also called lyophilisation. We used Freeze Dryer but those skilled in the art may as well use other well-known technologies of drying to achieve the same objective.
**characterized in that**
a. an energy content in the powdered human milk fortifier present in a quantity ranging from 70 kcal/100 mL to about 90 cal/100 mL;
b. a moisture component in the powdered human milk fortifier in a quantity ranging from 1.5 wt/wt % to about 4.5 wt/wt %;
c. Nutrients in the powdered milk fortifier present from the group of Nucleotides, Minerals including but not limited to calcium, phosphorous, IgA, IgM, IgG, Lactoferrin, Nucleotides, Linolenic acid and Growth factors alike.
